Europäisches Patentamt

European Patent Office

Office européen des brevets

(19)

(11) Veröffentlichungsnummer: **0 082 102**
**B1**

(12) **EUROPÄISCHE PATENTSCHRIFT**

(45) Veröffentlichungstag der Patentschrift:
**11.06.86**

(51) Int. Cl.⁴: **G 21 C 17/06**

(21) Anmeldenummer: **82710045.4**

(22) Anmeldetag: **28.09.82**

(54) **Verfahren zum Auffinden defekter Brennstabhüllrohre mit Hilfe von Ultraschall.**

(30) Priorität: **12.12.81 DE 3149362**

(43) Veröffentlichungstag der Anmeldung:
**22.06.83 Patentblatt 83/25**

(45) Bekanntmachung des Hinweises auf die Patenterteilung:
**11.06.86 Patentblatt 86/24**

(84) Benannte Vertragsstaaten:
**AT BE CH FR GB IT LI SE**

(56) Entgegenhaltungen:
**EP - A - 0 063 681**
**AT - B - 360 126**
**DE - A - 2 422 439**

(73) Patentinhaber: **Krautkrämer GmbH,
Robert-Bosch-Strasse 3 Postfach 1164,
D-5030 Hürth 5 (Efferen) (DE)**
Patentinhaber: **BROWN BOVERI REAKTOR GmbH,
Dudenstrasse 44, D-6800 Mannheim 1 (DE)**

(72) Erfinder: **Pieper, Kurt, Brahmsstrasse 11 A,
D-5210 Troisdorf 19 (DE)**
Erfinder: **Scharpenberg, Rainer, Im Krappenklingen 32,
D-6948 Waldmichelbach (DE)**

(74) Vertreter: **Dahlmann, Gerhard, Dipl.-Ing. et al, c/o Brown
Boveri & Cie., AG Zentralbereich ZPT/P Postfach 351,
D-6800 Mannheim (DE)**

LIBER, STOCKHOLM 1986

## Beschreibung

Die Erfindung betrifft ein Verfahren zum Auffinden defekter Brennstabhüllrohre aus innerhalb zu kompletten Brennelementen zusammengefaßten Brennstabbündeln, bei dem zwischen den Brennstabhüllrohren Ultraschallprüfköpfe hindurch bewegt werden, so daß zur Prüfung das jeweilige Hüllrohr zwischen zwei Ultraschallprüfköpfen angeordnet wird, wobei der eine Prüfkopf (Sendeprüfkopf) das Hüllrohr beschallt und der andere Prüfkopf (Empfangsprüfkopf) die aus dem Hüllrohr gelangenden Ultraschallsignale empfängt, und bei dem anschließend in einer Auswerteeinheit diejenigen Signale mit Hilfe eines Amplitudendiskriminators bewertet werden, die in einen zeitlichen Erwartungsbereich vorgegebener Breite fallen.

Ein Verfahren der vorstehend erwähnten Art ist beispielsweise aus dem Artikel von G. Bäro u.a. "Ortung defekter Brennstäbe in bestrahlten Brennelementen"'s, Tagungsbericht der Jahrestagung Kerntechnik 8o, Reaktortagung 1980, Berlin, 25.-27.03.1980, Herausgeber: Deutsches Atomforum e.V. Bonn, S. 827 ff, bekannt. Mit Hilfe des zeitlichen Erwartungsbereichesder in dem vorstehend erwähnten Artikel allerdings nicht näher beschrieben wird - sollen die aus dem Hüllrohr in den Empfangsprüfkopf gelangenden Ultraschallsignale (Umlaufechos) von den direkt von dem Sendeprüfkopf in den Empfangsprüfkopf gelangenden Signale (Durchschallungsechos) getrennt werden. Erst durch diese Maßnahme wird es möglich, automatisch die Laufzeiten der Umlaufechos zu bestimmen, ohne daß eine Verfälschung durch die Durchschallungsechos erfolgt.

Bei dem bisher verwendeten Verfahren wurde allerdings mit einem konstanten Erwartungsbereich gearbeitet. Dieses hat sich als nachteilig erwiesen, weil der Abstand zwischen den Prüfköpfen während ihrer Bewegung an den einzelnen Hüllrohren vorbei relativ stark schwanken kann. Damit ist es aber nicht ausgeschlossen, daß auch Durchschallungsechos in die Blende fallen und an sich defekte Brennstäbe als fehlerfrei klassifiziert werden.

Aus der DE-A-24 22 43g ist es bereits bekannt, den Erwartungsbereich für Fehlerechos nachzuführen, wenn sich die Dicke des Prüfstückes ändert. Eine Änderung der Dicke des Prüfstückes wird bei diesem bekannten Verfahren durch ständige Kontrolle des von der Rückwand des Prüfstückes reflektierten Echos signalisiert. Eine Übertragung dieses bekannten Verfahrens, nämlich die Dicke des Prüfstückes von Zeit zu Zeit zu kontrollieren und den Erwartungsbereich entsprechend nachzuregeln, wäre bei der Prüfung von Hüllrohren nur mit außerordentlich großem Aufwand möglich. Außerdem würden bei einem derartigen Verfahren alle diejenigen Änderungen des gegenseitigen Abstandes von Sende- und Empfangsprüfkopf, die nicht auf Dickenänderungen der Hüllrohre zurückzuführen sind, nicht berücksichtigt.

Der vorliegenden Erfindung liegt daher die Aufgabe zugrunde, ein Verfahren der eingangs erwähnten Art anzugeben, bei dem der Erwartungsbereich entsprechend der Abstandsänderung zwischen Sende- und Empfangsprüfkopf während der Bewegung dieser Prüfköpfe durch die Gassen des Brennelementes auf einfache Weise nachgeführt wird.

Diese Aufgabe wird erfindungsgemäß dadurch gelöst, daß der Anfang des Erwartungsbereiches für jedes zu prüfende Hüllrohr neu ermittelt wird, bevor sich dieses Hüllrohr zwischen dem Sende- und Empfangsprüfkopf befindet. Hierzu wird in dem Zwischenraum zwischen dem zuletzt geprüften Hüllrohr und dem neu zu prüfenden Hüllrohr die Laufzeit der Ultraschallsignale zwischen Sende- und Empfangsprüfkopf gemessen. Anschließend wird dann von diesem gemessenen Laufzeitwert ein konstanter Wert abgezogen, der so gewählt ist, daß das bei den Laufzeitmessungen empfangene Ultraschallsingal gerade nicht mehr in den Erwartungsbereich fällt.

Weitere Einzelheiten und Vorteile der Erfindung ergeben sich aus den im folgenden anhand von Figuren beschriebenen Ausführungsbeispielen.

Es zeigen:

Fig. 1 eine Draufsicht auf einen Ausschnitt eines Brennstabbündels mit an fingerförmigen Elementen befestigten Sende- und Empfangsprüfköpfen an 4 unterschiedlichen Orten;

Fig. 2a die Anordnung von Sende- und Empfangsprüfkopf bei der Bestimmung eines neuen Erwartungsbereiches;

Fig. 2b die Impulsdarstellung bei der Anordnung nach Fig. 2a;

Fig. 3a die Anordnung von Sende- und Empfangsprüfkopf bei der Prüfung eines Brennstabhüllrohres;

Fig. 3b die Impulsdarstellung bei der Anordnung nach Fig. 3a; und

Fig. 4 eine Schaltungsvorrichtung zur Durchführung des erfindungsgemäßen Verfahrens.

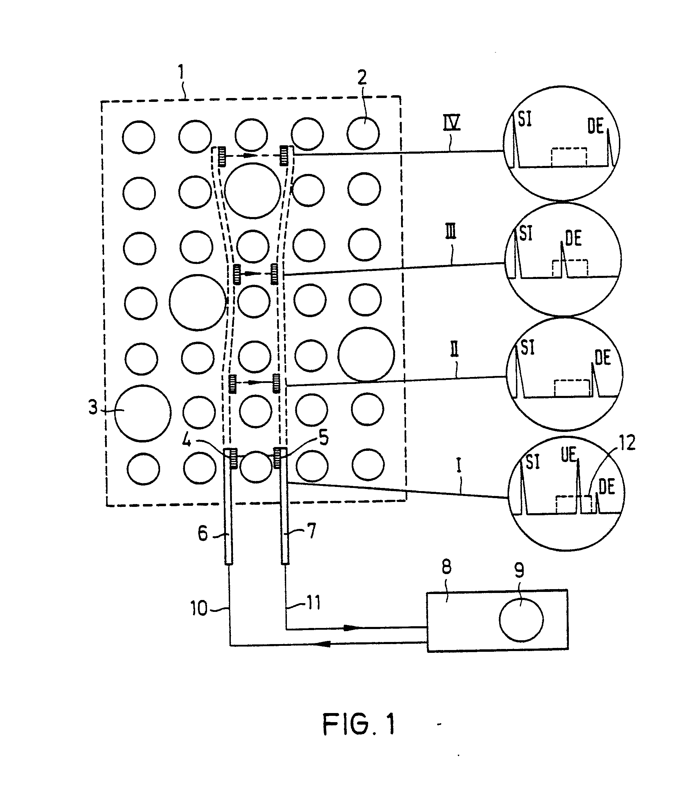

Anhand von Fig. 1 sollen noch einmal die Schwierigkeiten, die beim Messen mit festeingestelltem Erwartungsbereich auftreten, erläutert werden.

Mit 1 ist ein Brennstabbündel bezeichnet, das sich sowohl aus den Brennstäben 2 als auch aus den Führungsrohren 3 zusammensetzt. Die Brennstäbe bestehen im wesentlichen aus einem rohrförmigen Mantel, dem Brennstabhüllrohr, und dem in diesem Hüllrohr befindlichen radioaktiven Material. Zwischen den Brennstäben 2 und den Hüllrohren 3 befindet sich Wasser.

Zur Prüfung der Brennstabhüllrohre werden die Ultraschallprüfköpfe 4 und5 an fingerförmigen Halterungen 6 und 7 derart zwischen den Brennstäben hindurch geschoben, daß der eine Prüfkopf, der Sendeprüfkopf 4, das zu prüfende Hüllrohr so beschallt, daß ein Umlaufecho entsteht (Stellung I). Dieses Echo wird mit dem Empfangsprüfkopf 5 empfangen und das entsprechende elektrische Signal in einem Ultraschallprüfgerät 8 ausgewertet und kann auf dem Bildschirm 9 einer Kathodenstrahlröhre angezeigt werden. Über die Leitungen 10 und 11 ist das Ultraschallprüfgerät 8 mit dem Sende- bzw. Empfangsprüfkopf 4 bzw. 5 elektrisch verbunden.

Mit I bis IV sind unterschiedliche Stellungen der Prüfköpfe 4 und 5 sowie die diesen Stellungen entsprechenden Echodarstellungen auf dem Bildschirm g gekennzeichnet. In Stellung I erhält man üblicherweise außer dem Sendeimpuls SI das Umlaufecho UE sowie ein Durchschallungsecho DE, das von der direkten vom Sendeprüfkopf 4 in den Empfangsprüfkopf 5 gelangenden Ultraschallwelle herrührt. Besonders bei der dynamischen Prüfung, bei der die Sendeprüfköpfe 4 und Empfangsprüfköpfe 5 kontinuierlich an den Brennstäben 2 vorbeigeschoben werden, stört dieses Durchschallungsecho DE, da es sich nahe dem Umlaufecho UE befindet. Insbesondere, wenn ein defektes Brennstabhüllrohr vorliegt und die Amplitude des Umlaufechos durch Streuung in das Brennstabinnere abnimmt, kann es leicht zu Fehlanzeigen beim Vorhandensein eines Durchschallungsechos kommen. Man bildet aus diesem Grunde einen Erwartungsbereich, in den nach Möglichkeit nur Umlaufechos fallen. Dieser Erwartungsbereich 12 wurde strichliert in die Echodarstellungen eingezeichnet.

Wie bereits eingangs erwähnt, ergibt die Verwendung eines Erwartungsbereiches konstanter zeitlicher Lage falsche Meßergebnisse. Denn aufgrund der Änderungen des gegenseitigen Abstandes der Prüfköpfe entlang ihres Weges zwischen den Brennelementen hindurch (vgl. strichlierten Weg der fingerförmigen Halterungen 6 und 7) können die Durchschallungsechos ebenfalls in den Erwartungsbereich fallen (Stellung III) bzw. der Erwartungsbereich wird nicht voll ausgenutzt, so daß Umlaufechos aus dem Erwartungsbereich herausfallen können (Stellung IV).

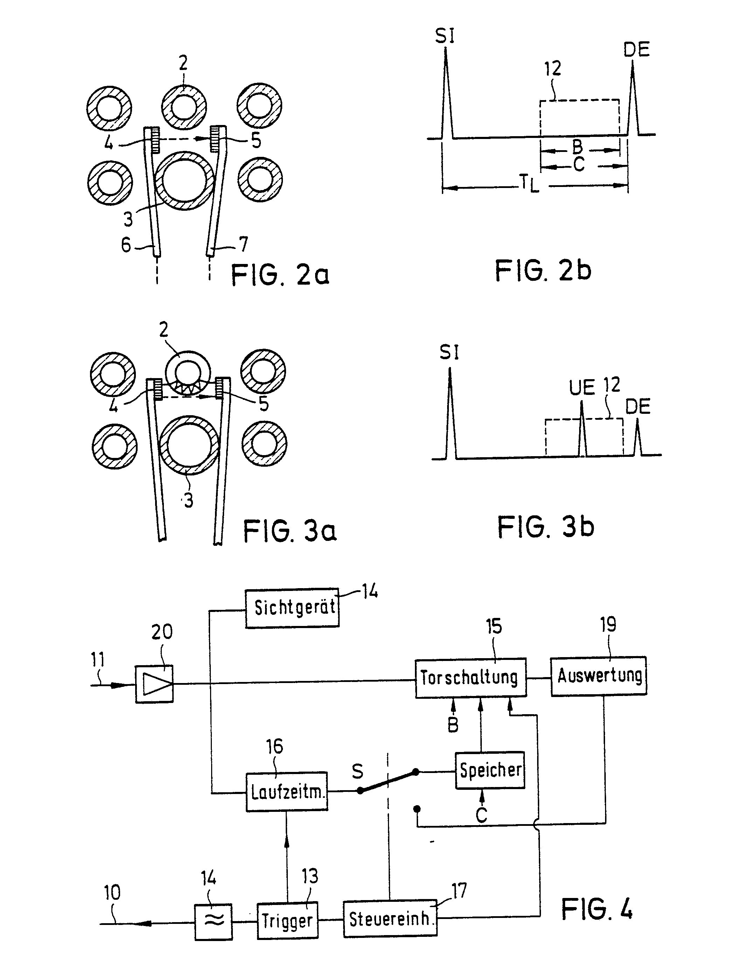

Erfindungsgemäß wird daher der Erwartungsbereich bei der Bewegung der Prüfköpfe 4 und 5 durch die Gassen des Brennelementes nachgeführt. Hierzu wird, wie aus Fig.2a ersichtlich, in dem Zwischenraum zwischen dem jeweils zuletzt geprüften und dem jeweils neu zu prüfenden Hüllrohr die Lage des Durchschallungsechos und damit die Laufzeit $T_L$ der Ultraschallimpulse zwischen Sende- und Empfangsprüfkopf 4 und 5 bestimmt. Der Anfang des Erwartungsbereiches ergibt sich dann, indem von dem gemessenen Laufzeitwert $T_L$ eine Konstante C abgezogen wird. Diese Konstante ist etwas größer als die ebenfalls konstante Breite B des Erwartungsbereiches 12 und ist so gewählt, daß das bei der Laufzeitmessung empfangene Durchschallungsecho DE gerade nicht mehr in den Erwartungsbereich fällt. Mit dem derart bestimmten Erwartungsbereich 12 wird dann - wie in Fig. 3a dargestellt - das nächste Hüllrohr 2 geprüft. Anschließend erfolgt dann wiederum - wie vorstehend beschriebendie Ermittlung des nächsten Erwartungsbereiches etc.

Fig. 2b und 3b zeigen die Echodarstellungen, die den in Fig.2a und 3a gezeigten Prüfkopfstellungen entsprechen. Der Erwartungsbereich 12 wurde wiederum strichliert angedeutet.

In Fig. 4 ist eine Vorrichtung zur Durchführung des vorstehend beschriebenen Verfahrens dargestellt. Ein Trigger 13 veranlaßt den Sender 14 zur Erzeugung elektrischer Impulse, die dem Sendeprüfkopf zugeführt werden. Die den Ultraschallechos entsprechenden elektrischen Signale gelangen über einen Verstärker 20 sowohl an ein Sichtgerät 14 und eine Torschaltung 15 als auch an eine Laufzeitmeßeinrichtung 16. Sofern die Prüfköpfe 4 und 5 die in Fig.2a gezeigte Stellung innehaben, bewirkt eine Steuereinheit 17, daß die Laufzeitmeßeinrichtung 16 über den Schalter S mit dem Speicher 18 verbunden ist. In diesem Speicher 18 wird der Anfang des Erwartungsbereiches, d.h. der gemessene Laufzeitwert $T_L$ abzüglich einer einstellbaren Konstanten C gespeichert. Die Konstante C kann beispielsweise mit Hilfe eines nicht dargestellten Kodierschalters eingestellt werden. Die Torschaltung 15 bleibt während der gesamten Erwartungsbereichsbestimmung geschlossen.

Haben sich nun die Prüfköpfe zur Prüfung des Hüllrohres 2 in die in Fig. 3a wiedergegebene Stellung weiterbewegt, so schaltet die Steuereinheit 17 die Laufzeiteinheit 16 über den Schalter an die Auswerteeinheit 19. Gleichzeitig wird die Torschaltungseinheit 15 freigegeben, so daß Echos, die in den Erwartungsbereich 12 fallen, zur Auswerteeinheit 19 gelangen. Die konstante Breite B des Erwartungsbereiches kann ebenfalls mit Hilfe eines nicht dargestellten Kodierschalters eingestellt werden. Als Torschaltung wird üblicherweise ein UND-Gatter verwendet.

Das vorgeschlagene Blendenpositionsverfahren ist nicht auf die Prüfung von Brennstäben bzw. Brennstabhüllrohren beschränkt, sondern kann auch bei der Prüfung anderer, dicht aneinander liegender rohrförmiger Prüfstücke (z.B. Rohre eines Wärmeaustauschers) verwendet werden.

**Patentanspruch**

1. Verfahren zum Auffinden defekter Brennstabhüllrohre aus innerhalb zu kompletten Brennelementen zusammengefaßten Brennstabbündeln, bei dem zwischen den Brennstabhüllrohren Ultraschallprüfköpfe hindurch bewegt werden, so daß zur Prüfung das jeweilige Hüllrohr zwischen zwei Ultraschallprüfköpfen angeordnet wird, wobei der eine Prüfkopf (Sendeprüfkopf) das Hüllrohr beschallt und der andere Prüfkopf (Empfangsprüfkopf) die aus dem Hüllrohr gelangenden Ultraschallsignale empfängt, und bei dem anschließend in einer Auswerteeinheit diejenigen Signale mit Hilfe eines Amplitudendiskriminators bewertet werden, die in einen zeitlichen Erwartungsbereich vorgegebener Breite fallen, dadurch gekennzeichnet,

daß der Anfang des zeitlichen Erwartungsbereiches (12) für jedes zu prüfende Hüllrohr (2) neu ermittelt wird, bevor sich dieses Hüllrohr (2) zwischen dem Sende- und Empfangsprüfkopf (4 und 5) befindet,

daß hierzu in dem Zwischenraum zwischen dem zuletzt geprüften Hüllrohr und dem neu zu prüfenden Hüllrohr die Laufzeit ($T_L$) der Ultraschallsignale zwischen Sende- und Empfangsprüfkopf (4 und 5) gemessen wird, und

daß von diesem gemessenen Laufzeitwert ($T_L$) ein konstanter Wert (C) abgezogen wird, der so gewählt ist, daß das bei der Laufzeitmessung empfangene Ultraschallsignal (DE) gerade nicht mehr in den Erwartungsbereich (12) fällt.


## Claim

Method for locating defective fuel-rod cladding tubes from within fuel-rod clusters combined to form complete fuel elements, in which method ultrasonic probes are moved through between the fuel-rod cladding tubes in such a manner that the respective cladding tube is arranged for testing purposes between two ultrasonic probes and one probe (transmitting probe) acoustically irradiates the cladding tube and the other probe (receiving probe) receives the ultrasonic signals emerging from the cladding tube, and in which method the signals falling within an expected time interval of predetermined length are subsequently evaluated in an analysing unit with the aid of an amplitude discriminator, characterised in that the beginning of the expected time interval (12) is redetermined for each cladding tube (2) to be checked, before this cladding tube (2) is located between the transmitting and receiving probe (4 and 5), that in the intermediate space between the cladding tube last checked and the cladding tube to be newly checked, the transit time (TL) of the ultrasonic signals between transmitting and receiving probe (4 and 5) is measured, and that from this measured transit time (TL), a constant value (C) is subtracted which is selected in such a manner that the ultrasonic signal (DE) received during the measurement of the transit time just fails to fall within the expected interval (12).


## Revendication

1. Procédé pour déceler des tubes de gainage défectueux de crayons combustibles faisant partie de faisceaux de crayons combustibles rassemblés à l'intérieur d'assemblages combustibles complets, où des têtes de détection à ultra-sons sont déplacées entre les tubes de gainage de crayons combustibles de sorte telle que chaque tube de gainage à contrôler est disposé entre deux têtes de détection à ultra-sons dont l'une (tête de détection émettrice) expose le tube de gainage à l'action des ultra-sons et l'autre (tête de détection réceptrice) reçoit les signaux ultra-sonores qui ont traversé le tube de gainage, et où les signaux qui tombent dans une plage de temps escomptée d'étendue prédéterminée sont ensuite évalués dans une unité d'évaluation à l'aide d'un discriminateur d'amplitude, caractérisé par le fait :

que le début de la plage de temps escomptée (12) est à nouveau déterminé pour chaque tube de gainage (2) à contrôler, avant que ce tube de gainage (2) ne se trouve entre la tête de détection émettrice et la tête de détection réceptrice (4 et 5),

qu'à cet effet, le temps de propagation ($T_L$) des signaux ultra-sonores entre la tête de détection émettrice et la tête de détection receptrice (4 et 5) est mesuré dans l'espace séparant le dernier tube de gainage contrôlé du tube de gainage suivant à contrôler, et

que de cette valeur mesurée de temps de propagation ($T_L$) est soustraite une valeur constante (C) qui est choisie de façon que le signal ultra-sonore (DE) reçu lors de la mesure du temps de propagation tombe juste au-delà de la plage de temps escomptée (12).

FIG. 1

FIG. 2a

FIG. 2b

FIG. 3a

FIG. 3b

FIG. 4